# EUROPÄISCHE PATENTSCHRIFT

(11) **EP 1 234 706 B1**
(45) Veröffentlichungstag und Bekanntmachung des Hinweises auf die Patenterteilung: **01.03.2006**
(21) Anmeldenummer: 01128197.9
(22) Anmeldetag: 28.11.2001
(51) Int. Cl.: B60K 17/356

(54) **Antriebsanordnung für allradgetriebene Fahrzeuge**
Drive train for all wheel drive vehicles
Dispositif d'entraînement pour véhicules à quatres roues motrices

(30) Priorität: 21.02.2001 DE 10108368
(43) Veröffentlichungstag der Anmeldung: 28.08.2002
(73) Patentinhaber: GKN Walterscheid GmbH, 53797 Lohmar (DE); Bibus Hydraulik AG, 8304 Wallisellen (CH)
(72) Erfinder: Wilks, Eberhard, Dipl.-Ing., 56307 Daufenbach (DE); Eidam, Manfred, Dipl.-Ing., 02681 Wilthen (DE); Wiest, Wolfgang, Ing., 89077 Ulm (DE); Dziuba, Peter, Dipl.-Ing., 88699 Frickingen (DE)
(74) Vertreter: Harwardt, Günther

(56) Entgegenhaltungen:
- EP-A- 0 562 594
- WO-A-93/09002
- DE-A- 19 827 130
- GB-A- 2 151 565
- GB-A- 2 257 496
- US-A- 4 306 640

## Beschreibung

Die Erfindung betrifft eine Antriebsanordnung für allradgetriebene Fahrzeuge mit Vorderrädern und mit Hinterrädern, insbesondere für Traktoren für Landmaschinen oder Baumaschinen oder für selbstfahrende Arbeitsmaschinen, umfassend einen Antriebsmotor, einen ersten Antrieb zum Antreiben der Hinterräder, einen zweiten Antrieb zum Antreiben der Vorderräder, eine verstellbare Hydropumpe, die von dem Antriebsmotor angetrieben ist, einen verstellbaren ersten Hydromotor der antriebsmäßig mit dem ersten Antrieb zum Antreiben der Hinterräder verbunden ist und der antriebsmäßig mit dem zweiten Antrieb zum Antreiben der Vorderräder verbindbar ist, einen zweiten Hydromotor, der mittels einer ersten schaltbaren Kupplung mit dem ersten Antrieb zum Antreiben der Hinterräder verbindbar ist und der antriebsmäßig mit dem zweiten Antrieb zum Antreiben der Vorderräder verbindbar ist.

Eine solche Antriebsanordnung ist aus der EP 0562 594 A1 bekannt. Der Antriebsmotor ist mechanisch direkt mit dem ersten Abtrieb zum Antreiben der Hinterräder fest verbunden. Ferner ist der erste Hydromotor mechanisch fest mit dem ersten Antrieb zum Antrieb der Hinterräder und der zweite Hydromotor mechanisch fest mit dem zweiten Antrieb zum Antrieb der Vorderräder verbunden. Über eine schaltbare Kupplung können der erste Antrieb und der zweite Antrieb mechanisch miteinander gekoppelt werden.

Die DE 198 27 130 A1 zeigt eine Antriebsanordnung, bei der eine Hydropumpe mittels eines Antriebsmotors angetrieben wird. Ferner ist der Antriebsmotor fest mit einem zweiten Antrieb zum Antreiben der Vorderräder mechanisch verbunden. Die Hydropumpe treibt zwei erste Hydromotoren an, die jeweils zum Antreiben eines Hinterrades dienen. Ein zweiter Hydromotor ist vorgesehen, um neben dem rein mechanischen Antrieb über den Antriebsmotor einen weiteren Antrieb zum Antreiben der Vorderräder zu gewährleisten, wobei der zweite Motor mittels einer Schaltkupplung zugeschaltet werden kann.

Bei anderen bisher bekannten vollhydrostatisch angetriebenen Fahrzeugen wird üblicherweise eine Hydropumpe von einem Antriebsmotor angetrieben. Die Hydropumpe treibt wiederum Hydromotoren an den Antriebsachsen der Räder an. Hierbei können die Hydropumpe als Verstellpumpe und/oder die Hydromotoren als Verstellmotoren ausgebildet sein, um die Fahrgeschwindigkeit stufenlos variieren zu können. Jedoch reicht der Verstellbereich der Hydropumpe und der Hydromotoren in der Regel lediglich aus, um einen Fahrgeschwindigkeitsbereich bis ca. 25 km/h abdecken zu können. Um höhere Fahrgeschwindigkeiten zu ermöglichen, wird bei bekannten Antriebskonzepten üblicherweise ein unsynchronisiertes Zweistufengetriebe vorgesehen. Der Fahrer hat somit die Möglichkeit, zwischen zwei Fahrstufen zu wählen, wobei eine für geringe Geschwindigkeiten und eine für höhere Geschwindigkeiten ausgelegt ist. Aufgrund der üblicherweise unsynchronisierten Bauweise des Schaltgetriebes muss das Fahrzeug jedoch vor dem Umschalten gestoppt werden.

Hydrostatische Antriebssysteme weisen in der Regel einen Fahrgeschwindigkeitsbereich auf, in dem der Wirkungsgrad deutlich höher ist, als in den übrigen Fahrgeschwindigkeitsbereichen. Üblicherweise wird ein hydrostatisches Antriebssystem derart ausgelegt, dass der hohe Wirkungsgrad bei mittleren Fahrgeschwindigkeiten erreicht wird. Bei extrem langsamer Fahrt oder schnellerer Fahrt bewegt sich der Wirkungsgrad jedoch auf einem unakzeptablen niedrigen Niveau.

Ferner weisen bekannte Allradantriebe mit hydrostatischem Antrieb eine starre Verbindung zwischen der Vorderachse und der Hinterachse auf. Bei Kurvenfahrten wirkt sich die starre Verbindung nachteilig aus, da der Kurvenradius der Vorderräder größer ist als der Kurvenradius der Hinterräder, so dass es zu einem Verspannen der Antriebselemente, in der Regel der Antriebswellen, kommt. Die Verspannungen, die in den Antriebselementen auftreten, ergeben Blindleistungen, die je nach Fahrzeugaufstandsfläche zu Schlupf an den Vorder- und den Hinterrädern führen. Dies führt zu einem höheren Verschleiß der Reifen oder bei Fahrten im Grünlandbetrieb zum Aufreißen der Grasnarbe.

Aufgabe der vorliegenden Erfindung ist es, eine eingangs genannte Antriebsanordnung bereitzustellen, die über einen möglichst großen Fahrgeschwindigkeitsbereich einen hohen Wirkungsgrad aufweist und bei der ein Verspannen der Antriebselemente bei Kurvenfahrt vermieden wird.

Diese Aufgabe wird erfindungsgemäß dadurch gelöst, daß der zweite Hydromotor mittels einer zweiten schaltbaren Kupplung mit dem zweiten Antrieb zum Antreiben der Vorderräder verbunden ist, wobei der erste Hydromotor einen hohen Wirkungsgrad innerhalb eines ersten Fahrgeschwindigkeitsbereichs des Fahrzeugs aufweist und der zweite Hydromotor einen hohen Wirkungsgrad innerhalb eines zweiten Fahrgeschwindigkeitsbereichs des Fahrzeugs aufweist und wobei der erste Fahrgeschwindigkeitsbereich über dem zweiten Fahrgeschwindigkeitsbereich liegt, jedoch mit dem ersten Fahrgeschwindigkeitsbereich eine Überschneidung aufweist.

Durch diese Antriebsanordnung lassen sich drei unterschiedliche Antriebssituation realisieren. In einer ersten Schaltstellung treibt der erste Hydromotor des ersten Antriebs die Hinterräder an und der zweite Hydromotor ist antriebsmäßig mit dem zweiten Antrieb zum Antreiben der Vorderräder verbunden. Der erste Antrieb und der zweite Antrieb sind nicht mechanisch miteinander gekoppelt. Dies bedeutet, dass in dieser Schaltstellung ein Verspannen der Antriebselemente bei Kurvenfahrten vermieden wird, da die Drehmomente vom ersten Antrieb und den zweiten Antrieb unabhängig voneinander übertragen werden.

Der erste Hydromotor weist einen hohen Wirkungsgrad im ersten Fahrgeschwindigkeitsbereich, in der Regel dem Hauptfahrgeschwindigkeitsbereich, des Fahrzeugs auf. Bei Traktoren liegt dieser Bereich vorzugsweise zwischen 5 und 12 km/h. Der zweite Hydromotor weist hingegen im zweiten, darüberliegenden Fahrgeschwindigkeitsbereich höherer Geschwindigkeit einen hohen Wirkungsgrad auf. Dies bedeutet, dass im Hauptfahrgeschwindigkeitsbereich der erste Hydromotor einen deutlich höheren Anteil am gesamten Antriebsmoment übernimmt als der zweite Hydromotor. Bei der ersten Schaltstellung bedeutet dies, dass ein höheres Antriebsdrehmoment über die Hinterräder als über die Vorderräder übertragen wird. Vorzugsweise werden 70 % des gesamten Antriebsdrehmoments über die Hinterräder und 30 % des gesamten Antriebsdrehmoments über die Vorderräder übertragen. Sobald sich die Fahrgeschwindigkeit des Fahrzeugs erhöht, ändert sich dieses Verhältnis aufgrund der sich in Abhängigkeit der Fahrgeschwindigkeit ändernden Wirkungsgrade der Hydromotoren. Im zweiten Fahrgeschwindigkeitsbereich, der über dem ersten Fahrgeschwindigkeitsbereich liegt, wird der größte Anteil des gesamten Antriebsdrehmoments über die Vorderräder übertragen. Somit ist gewährleistet, dass über einen großen Fahrgeschwindigkeitsbereich hohe Drehmomente mit einem hohen Wirkungsgrad übertragen werden können.

In einer zweiten Schaltstellung ist der erste Hydromotor sowohl mit dem ersten Antrieb zum Antreiben der Hinterräder als auch mit dem zweiten Antrieb zum Antreiben der Vorderräder verbunden. Dies bedeutet, dass eine starre Verbindung zwischen den Vorderrädern und den Hinterrädern vorliegt. Somit wird auf alle Räder das gleiche Drehmoment übertragen, wobei über einen sehr großen Fahrgeschwindigkeitsbereich ein hoher Wirkungsgrad erzielt wird. Zudem ist die zweite Schaltstellung von Bedeutung, weil die Antriebsanordnung in der ersten Schaltstellung ein hydraulisches Zentraldifferential darstellt, da beide Hydromotoren von einer gemeinsamen Druckquelle, und zwar der Hydropumpe, angetrieben sind. Ober den Schwenkwinkel kann die Drehmomentverteilung zwischen Vorder- und Hinterrädern beeinflusst werden. Im Fall, dass zum Beispiel die Vorderräder durchdrehen, werden die Hinterräder nicht mehr angetrieben. Somit ist eine mechanische Sperre erforderlich, die den ersten Antrieb mit dem zweiten Antrieb verbindet. Dies wird dadurch erreicht, dass der erste Hydromotor mit dem ersten Antrieb und dem zweiten Antrieb verbunden wird.

In einer dritten Schaltstellung ist der zweite Hydromotor mit dem ersten Antrieb zum Antreiben der Hinterräder verbunden. Somit wird ein reiner Heckantrieb realisiert.

Vorzugsweise ist die verstellbare Hydropumpe durch eine Axialkolbenpumpe in Schrägscheibenbauart oder Schrägachsenbauart dargestellt.

Der zweite Hydromotor kann als verstellbarer Hydromotor ausgeführt sein. Somit wird eine freie Drehmomentverteilung zwischen dem ersten Antrieb zum Antreiben der Hinterräder und dem zweiten Antrieb zum Antreiben der Vorderräder ermöglicht. Der erste Hydromotor ist vorzugsweise als Axialkolbenmator in Schrägscheibenbauart oder Schrägachsenbauart ausgeführt.

Ebenso ist der zweite Hydromotor vorzugsweise durch einen Axialkolbenmotor in Schrägscheibenbauart oder Schrägachsenbauart dargestellt.

Um jeweils den Bereich mit hohem Wirkungsgrad der Hydromotoren zu vergrößern, können der erste Hydromotor und der zweite Hydromotor als Axialkolbenmotor in Schrägscheibenbauart oder Schrägachsenbauart dargestellt sein, die einen Schwenkwinkel von bis zu 45° zulassen.

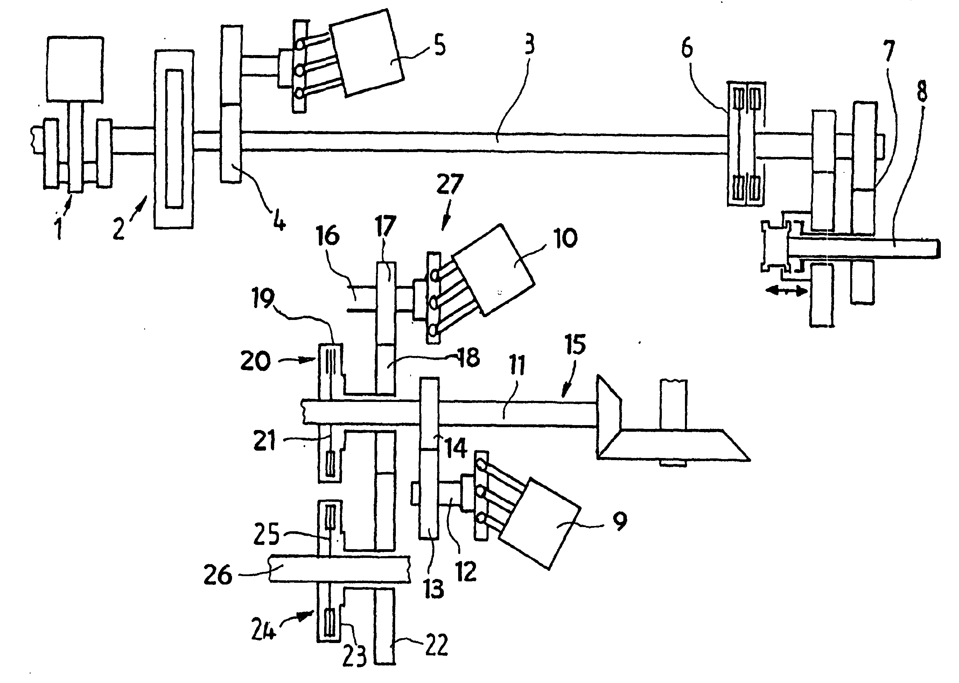

Eine bevorzugte Ausführungsform wird anhand der Zeichnung näher erläutert.

Die Figur zeigt schematisch eine erfindungsgemäße Antriebsanordnung.

Die Figur zeigt einen Antriebsmotor 1 eines Fahrzeugs, der über einen Schwingungsdämpfer 2 mit einer Hauptantriebswelle 3 verbunden ist. Über eine Getriebeanordnung 4 ist eine verstellbare Hydropumpe 5 durch die Hauptantriebswelle 3 antreibbar. Die Hydropumpe 5 ist als Axialkolbenpumpe in Schrägachsenbauart ausgeführt. Die Hauptantriebswelle 3 ist ferner über eine schaltbare Kupplung 6 mit einem zweistufigen Getriebe 7 verbunden. Das zweistufige Getriebe 7 weist eine Ausgangswelle 8 auf, über die eine Maschine antreibbar ist. Der Antriebsmotor 1 wird mit einer konstanten Drehzahl betrieben. Das zweistufige Getriebe 7 ist vorzugsweise derart ausgestaltet, dass zwischen 540 U/min und 1000 U/min an der Ausgangswelle 8, z.B. Zapfwelle zum Antrieb von landwirtschaftlichen Geräten umgeschaltet werden kann.

Die Hydropumpe 5 ist leitungsmäßig mit einem ersten Hydromotor 9 und einem zweiten Hydromotor 10 verbunden. Beide Hydromotoren 9, 10 sind als Axialkolbenmotoren in Schrägachsenbauweise ausgeführt.

Der erste Hydromotor 9 treibt über eine Abtriebswelle 12 sowie die beiden Zahnräder 13, 14 die erste Antriebswelle 11, welche über weitere Getriebeglieder zum Antrieb der Hinterräder des Fahrzeugs dient. Diese bilden zusammen den ersten Antrieb 15.

Der zweite Hydromotor 10 treibt über eine zweite Welle 16 und Zahnräder 17, 18 ein Außenteil 20 einer ersten schaltbaren Kupplung 19 an. Ein Innenteil 21 der ersten schaltbaren Kupplung 19 ist mit der ersten Welle 11 des ersten Antriebs 15 zum Antreiben der Vorderräder verbunden.

Der zweite Hydromotor 10 ist zudem über die zweite Welle 16 und die Zahnräder 17, 18 sowie über ein weiteres Zahnrad 22 mit dem Außenteil 23 einer zweiten schaltbaren Kupplung 24 verbunden. Ein Innenteil 25 der zweiten schaltbaren Kupplung 24 ist mit einer Welle 26 zum Antrieb der Vorderräder verbunden. Diese bilden zusammen einen zweiten Antrieb 27, der die Vorderräder des Fahrzeugs antreibt.

Der Antriebsmotor 1 läuft mit einer konstanten Drehzahl. Mittels der verstellbaren Hydropumpe 5 und der Hydromotoren 9, 10, von denen zumindest der erste Hydromotor 9 verstellbar hinsichtlich seines Schluckvolumens ist, lässt sich die Fahrgeschwindigkeit des Fahrzeugs stufenlos variieren. In der Schaltstellung, bei der die erste schaltbare Kupplung 19 offen ist, dass heißt kein Drehmoment überträgt, und die zweite schaltbare Kupplung 24 geschlossen ist, dass heißt Drehmoment überträgt, werden die Vorderräder ausschließlich vom zweiten Hydromotor 10 und die Hinterräder ausschließlich vom ersten Hydromotor 9 angetrieben. Diese Schaltstellung stellt somit ein hydraulisches Zentraldifferential dar. Beide Hydromotoren 9, 10 sind nämlich mit der Hydropumpe 5 verbunden.

Die Drehmomente, die auf die Vorderräder oder die Hinterräder übertragen werden, können frei gewählt werden. Grundsätzlich ist jedoch auch eine Lösung möglich, bei der der zweite Hydromotor 10 als Konstantmotor ausgebildet ist.

Wenn sowohl die erste schaltbare Kupplung 19 als auch die zweite schaltbare Kupplung 24 geschlossen sind, liegt eine starre mechanische Verbindung zwischen der ersten Welle 11 des ersten Antriebs 15 und der Welle 26 des zweiten Antriebs 27 vor. Diese Schaltstellung wirkt somit als Differentialsperre, bei der alle Räder mit gleichem Drehmoment beaufschlagt werden.

In einer dritten Schaltstellung ist die erste schaltbare Kupplung 19 geschlossen und die zweite schaltbare Kupplung 24 geöffnet, so dass der erste Hydromotor 9 und der zweite Hydromotor 10 die erste Welle 11 des ersten Antriebs 18 und damit die Hinterräder antreiben. Die Vorderräder laufen in dieser Schaltstellung nicht angetrieben frei mit.

### Bezugszeichenliste

- 1: Antriebsmotor
- 2: Schwingungsdämpfer
- 3: Hauptantriebswelle
- 4: Getriebeanordnung
- 5: Hydropumpe
- 6: Kupplung
- 7: Getriebe
- 8: Ausgangswelle
- 9: erster Hydromotor
- 10: zweiter Hydromotor
- 11: erste Welle
- 12: Antriebswelle
- 13: Zahnrad
- 14: Zahnrad
- 15: erster Antrieb
- 16: zweite Welle
- 17: Zahnrad
- 18: Zahnrad
- 19: erste schaltbare Kupplung
- 20: Außenteil
- 21: Innenteil
- 22: Zahnrad
- 23: Außenteil
- 24: zweite schaltbare Kupplung
- 25: Innenteil
- 26: Welle
- 27: zweiter Antrieb

## Patentansprüche

1. Antriebsanordnung für allradgetriebene Fahrzeuge mit Vorderrädern und mit Hinterrädern, insbesondere für Traktoren für Landmaschinen oder Baumaschinen oder für selbstfahrende Arbeitsmaschinen, umfassend
- einen Antriebsmotor (1),
- einen ersten Antrieb (15) zum Antreiben der Hinterräder,
- einen zweiten Antrieb (27) zum Antreiben der Vorderräder,
- eine verstellbare Hydropumpe (5), die von dem Antriebsmotor (1) angetrieben ist,
- einen verstellbaren ersten Hydromotor (9) der antriebsmäßig mit dem ersten Antrieb (15) zum Antreiben der Hinterräder verbunden ist und der antriebsmäßig mit dem zweiten Antrieb (27) zum Antreiben der Vorderräder verbindbar ist,
- einen zweiten Hydromotor (10), der mittels einer ersten schaltbaren Kupplung (20) mit dem ersten Antrieb (15) zum Antreiben der Hinterräder verbindbar ist und der antriebsmäßig mit dem zweiten Antrieb (27) zum Antreiben der Vorderräder verbindbar ist,
**dadurch gekennzeichnet,**
**daß** der zweite Hydromotor (10) mittels einer zweiten schaltbaren Kupplung (24) mit dem zweiten Antrieb (27) zum Antreiben der Vorderräder verbunden ist,
wobei der erste Hydromotor (9) einen hohen Wirkungsgrad innerhalb eines ersten Fahrgeschwindigkeitsbereichs des Fahrzeugs aufweist und der zweite Hydromotor (10) einen hohen Wirkungsgrad innerhalb eines zweiten Fahrgeschwindigkeitsbereichs des Fahrzeugs aufweist und
wobei der zweite Fahrgeschwindigkeitsbereich über dem ersten Fahrgeschwindigkeitsbereich liegt, jedoch mit dem ersten Fahrgeschwindigkeitsbereich eine Überschneidung aufweist.

2. Antriebsanordnung nach Anspruch 1,
**dadurch gekennzeichnet,**
**daß** die verstellbare Hydropumpe (5) durch eine Axialkolbenpumpe in Schrägscheibenbauart oder Schrägachsenbauart dargestellt ist.

3. Antriebsanordnung nach einem der Ansprüche 1 oder 2,
**dadurch gekennzeichnet,**
**daß** der zweite Hydromotor (10) verstellbar ist.

4. Antriebsanordnung nach einem der Ansprüche 1 bis 3,
**dadurch gekennzeichnet,**
**daß** der zweite Hydromotor (10) durch einen Axialkolbenmotor in Schrägscheibenbauart oder Schrägachsenbauart dargestellt ist.

5. Antriebsanordnung nach Anspruch 4,
**dadurch gekennzeichnet,**
**daß** der Schwenkwinkel des zweiten Hydromotors (10) bis zu 45 Grad beträgt.

6. Antriebsanordnung nach einem der Ansprüche 1 bis 5,
**dadurch gekennzeichnet,**
**daß** der erste Hydromotor (9) durch einen Axialkolbenmotor in Schrägscheibenbauart oder Schrägachsenbauart dargestellt ist.

7. Antriebsanordnung nach Anspruch 6,
**dadurch gekennzeichnet,**
**daß** der Schwenkwinkel des ersten Hydromotors (9) bis zu 45 Grad beträgt.

## Claims

1. A drive assembly for four-wheel drive vehicles with front wheels and with rear wheels, more particularly for tractors for agricultural implements or construction machinery or for self-propelled working machines, comprising
- an engine (1),
- a first drive (15) for driving the rear wheels,
- a second drive (27) for driving the front wheels,
- an adjustable hydraulic pump (5) which is driven by the engine (1),
- an adjustable first hydraulic motor (9) which, drivewise, is connected to the first drive (15) for driving the rear wheels and which, drivewise, can be connected to the second drive (27) for driving the front wheels,
- a second hydraulic motor (10) which, by means of a first switchable coupling (20), can be connected to the first drive (15) for driving the rear wheels and which, drivewise, can be connected to the second drive (27) for driving the front wheels,
**characterised in**
**that**, by means of a second switchable coupling (24), the second hydraulic motor (10) can be connected to the second drive (27) for driving the front wheels,
wherein the first hydraulic motor (9) comprises a high degree of efficiency within a first driving speed range of the vehicle and the second hydraulic motor (10) comprises a high degree of efficiency within a second driving speed range of the vehicle, and
wherein the second driving speed range is above the first driving speed range, but wherein there exists an overlap between the first driving speed range and the first driving speed range.

2. A drive assembly according to claim 1,
**characterised in**
**that** the adjustable hydraulic pump (5) is provided in the form of an axial piston pump of the inclined disc type or the inclined axis type.

3. A drive assembly according to any one of claims 1 or 2,
**characterised in**
**that** the second hydraulic motor (10) is adjustable.

4. A drive assembly according to any one of claims 1 to 3,
**characterised in**
**that** the second hydraulic motor (10) is provided in the form of an axial piston motor of the inclined disc type or of the inclined axis type.

5. A drive assembly according to claim 4,
**characterised in**
**that** the pivot angle of the second hydraulic motor (10) amounts to any value up to 45 degrees.

6. A drive assembly according to any one of claims 1 to 5,
**characterised in**
**that** the first hydraulic motor (9) is provided in the form of an axial piston motor of the inclined disc type or of the inclined axis type.

7. A drive assembly according to claim 6,
**characterised in**
**that** the pivot angle of the first hydraulic motor (9) amounts to any value up to 45 degrees.

## Revendications

1. Dispositif d'entraînement pour véhicule à quatre roues motrices comportant des roues avant et des roues arrière, en particulier pour des tracteurs de machines agricoles ou d'engins de chantier ou des machines-outils automotrices, comprenant
- un moteur d'entraînement (1),
- un premier système d'entraînement (15) destiné à actionner les roues arrière,
- un deuxième système d'entraînement (27) destiné à actionner les roues avant,
- une pompe hydraulique (5) à cylindrée variable, qui est actionnée par le moteur d'entraînement (1),
- un premier moteur hydraulique (9) à cylindrée variable, qui est relié par transmission avec le premier système d'entraînement (15) destiné à actionner les roues arrière et qui est apte à être relié par transmission avec le deuxième système d'entraînement (27) destiné à actionner les roues avant,
- un deuxième moteur hydraulique (10), qui est apte à être relié, au moyen d'un premier embrayage (20) embrayable, au premier système d'entraînement (15) destiné à actionner les roues arrière et qui est apte à être relié par transmission avec le deuxième système d'entraînement (27) destiné à actionner les roues avant,
**caractérisé en ce que**
le deuxième moteur hydraulique (10) est relié, au moyen d'un deuxième embrayage (24) embrayable, au deuxième système d'entraînement (27) destiné à actionner les roues avant,
le premier moteur hydraulique (9) ayant un rendement élevé à l'intérieur d'une première plage de vitesses de déplacement du véhicule et le deuxième moteur hydraulique (10) ayant un rendement élevé à l'intérieur d'une deuxième plage de vitesses de déplacement du véhicule, et
la deuxième plage de vitesses de déplacement étant située au-dessus de la première plage de vitesses de déplacement, en possédant toutefois une zone de chevauchement avec la première plage de vitesses de déplacement.

2. Dispositif d'entraînement selon la revendication 1, **caractérisé en ce que** la pompe hydraulique (5) à cylindrée variable est formée par une pompe à pistons axiaux dans un mode de construction à plateau oscillant ou un mode de construction à axe incliné.

3. Dispositif d'entraînement selon la revendication 1 ou 2, **caractérisé en ce que** le deuxième moteur hydraulique (10) est un moteur à cylindrée variable.

4. Dispositif d'entraînement selon l'une quelconque des revendications 1 à 3, **caractérisé en ce que** le deuxième moteur hydraulique (10) est formé par un moteur à pistons axiaux dans un mode de construction à plateau oscillant ou un mode de construction à axe incliné.

5. Dispositif d'entraînement selon la revendication 4, **caractérisé en ce que** l'angle de pivotement du deuxième moteur hydraulique (10) peut atteindre jusqu'à 45 degrés.

6. Dispositif d'entraînement selon l'une quelconque des revendications 1 à 5, **caractérisé en ce que** le premier moteur hydraulique (9) est formé par un moteur à pistons axiaux dans un mode de construction à plateau oscillant ou un mode de construction à axe incliné.

7. Dispositif d'entraînement selon la revendication 6, **caractérisé en ce que** l'angle de pivotement du premier moteur hydraulique (9) peut atteindre jusqu'à 45 degrés.
